Europäisches Patentamt

European Patent Office

Office européen des brevets

(19)

(11) **EP 0 797 113 A1**

(12) **DEMANDE DE BREVET EUROPEEN**

(43) Date de publication:
**24.09.1997 Bulletin 1997/39**

(51) Int Cl.⁶: **G02B 6/12**, G02F 1/29

(21) Numéro de dépôt: **97400601.7**

(22) Date de dépôt: **18.03.1997**

(84) Etats contractants désignés:
**DE GB**

(30) Priorité: **20.03.1996 FR 9603450**

(71) Demandeur: **FRANCE TELECOM**
**75015 Paris (FR)**

(72) Inventeurs:
• **Bosc, Dominique**
  **22300 Lannion (FR)**

• **Devoldere, Nicole**
  **22710 Penvenan (FR)**
• **Loisel, Bertrand**
  **22300 Lannion (FR)**

(74) Mandataire: **Dubois-Chabert, Guy et al**
**Société de Protection des Inventions**
**25, rue de Ponthieu**
**75008 Paris (FR)**

(54) **Coupleur directif actif mixte silice/polymère, en optique intégrée**

(57) L'invention concerne un coupleur optique directif, comportant au moins deux coeurs (26, 28) de guide optique, en silice, reposant sur une gaine (24) en un matériau diélectrique minéral, et une couche de recouvrement (30) en un matériau polymère, qui recouvre les deux coeurs de guide optique, et dont l'indice est inférieur à celui des coeurs de guide optique.

## FIG.3

## Description

Domaine technique

L'invention concerne le domaine des coupleurs directifs en optique intégrée, et en particulier le domaine des coupleurs directifs actifs fonctionnant en mode thermo-optique.

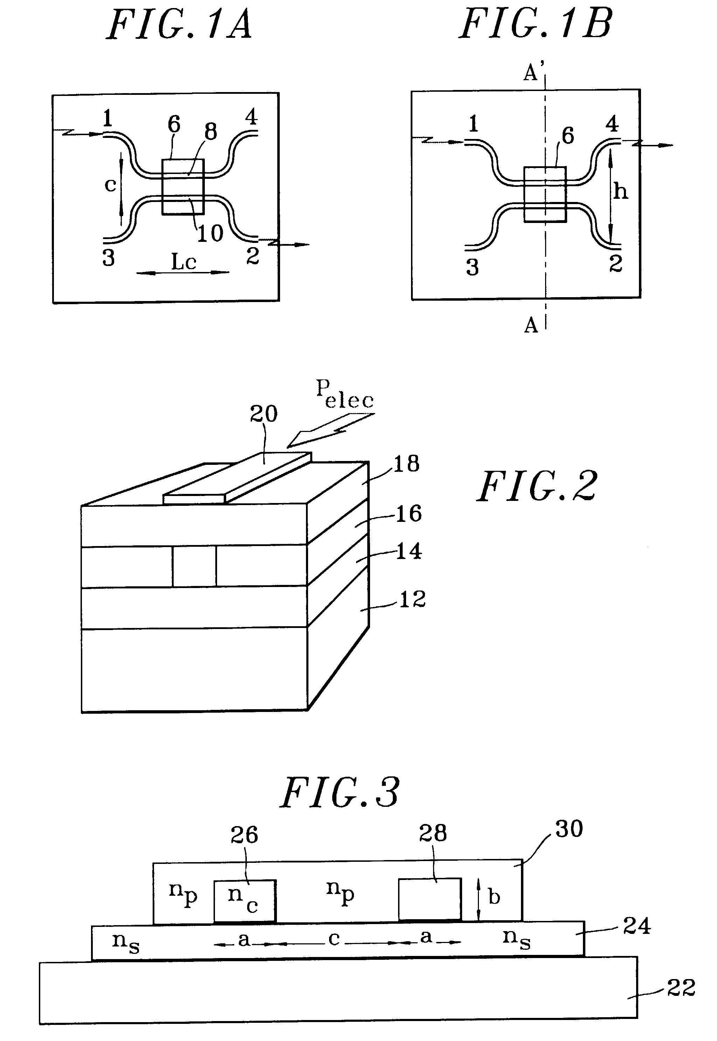

Le principe de fonctionnement d'un coupleur directif actif va être rappelé, en liaison avec les figures 1A et 1B sur lesquelles un coupleur directif 6 est représenté dans ses deux états "Cross-state" ("état croisé", figure 1A) et "Bar-state" (figure 1B).

Le coupleur 6 comporte deux guides optiques 8, 10 espacés d'une distance c sur une longueur de couplage $L_C$. La distance c est choisie suffisamment petite pour que l'énergie puisse passer d'un guide à l'autre.

La figure 1A représente le cas où un signal optique introduit dans un guide 1, dans le prolongement du guide 8 du coupleur 6, ressort du coupleur par un guide 2 situé dans le prolongement du guide 10 du coupleur 6. C'est l'état "Cross-state" (état croisé), obtenu par choix de la distance c sur la longueur $L_C$.

Dans le cas de la figure 1B, un signal optique est introduit dans le guide 1 et ressort par le guide 4, situé dans le prolongement du guide 8 du coupleur 6.

Pour un coupleur directif symétrique, le pourcentage de puissance qui passe du guide 1 au guide 4 est donné par :

$$P_{1,4} = \sin^2 (Kz)$$

où $K = \pi/(2L_C) + m\pi/L_C$, m=0, 1, 2, ... ; K est le coefficient de couplage, qui dépend également de la constante de propagation $\beta$ des guides.

Le passage de l'état de la figure 1A à celui de la figure 1B est obtenu en agissant sur le coefficient de couplage K, ou bien sur la constante de propagation $\beta$ d'un des guides 8, 10, ou bien des deux guides. Cette action sur K ou sur $\beta$ se fait au moyen d'un activateur.

Les coupleurs directifs peuvent être activés par des effets électro-optiques, quand ils sont construits avec des matériaux à forte propriété non linéaire telle que $LiNbO_3$, ou bien encore avec certains polymères. Ce type d'activation est intéressant pour la modulation à haut débit, ou la commutation rapide.

Les coupleurs directifs peuvent également être activés par effet thermo-optique. Une différence d'indice est induite par la chaleur. On réalise ainsi des aiguilleurs meilleur marché, quand la vitesse d'activation d'un état du coupleur n'a pas à être trop rapide (c'est-à-dire dans la gamme des millisecondes)

La réalisation de coupleurs directifs activés par mode thermo-optique est décrite par exemple dans le document intitulé "Polymer thermo-optic switching matrix for space-routing in transparent OFDM networks" par N. Keil et al., publié dans SPIE, vol. 2449, pages 281-292 (1995). La structure d'un coupleur directif selon ce document va être rappelée, en liaison avec la figure 2. Sur un substrat 12 en silicium repose une couche tampon 14 en $SiO_X$, une couche 16 de guide d'onde polymère (BDK-PMMA), et une couche tampon 18 en téflon. Un élément de chauffage 20 est déposé sur la couche 18. Le principe de fonctionnement d'un tel dispositif repose sur la dépendance en température de l'indice de réfraction du guide d'onde 16 en matériau polymère. Le coefficient de variation en température de l'indice de réfraction du PMMA est $-140 \times 10^{-6}/°C$. Par conséquent, le coupleur en polymère thermo-optique présente l'avantage, par rapport à un coupleur en silice, d'une plus forte variation d'indice avec la température, et d'un meilleur confinement de la chaleur.

Cependant, une structure guide entièrement en polymère nécessite de mettre en oeuvre une technologie qui est différente de celle mise en oeuvre pour des composants en silice, et qui est moins éprouvée du point de vue industriel. C'est en particulier le cas pour l'étape de gravure d'une couche de polymère, afin de réaliser le, ou les, guide(s) optique(s) du coupleur. De plus, la réalisation d'une telle structure pose des problèmes d'adaptation des indices de réfraction des matériaux, quand il faut connecter les guides polymères à des fibres en silice.

On connaît également des aiguilleurs thermo-optiques, à base de MACH-ZEHNDER, entièrement en silice, qui ont de faibles consommations électriques. Mais les guides de ces aiguilleurs sont fabriqués suspendus, de façon à éviter les déperditions de chaleur. Ceci se fait au détriment de la simplicité, car la technologie des guides suspendus est délicate et coûteuse. De plus, les temps de réponse augmentent en passant de 1 à 3 millisecondes, voire à 30 millisecondes, suivant le type de suspension.

Un autre problème, qui se pose dans le cas des coupleurs réalisés entièrement en matière minérale, est celui du recouvrement de l'espace interguide par la couche minérale, en particulier dans les zones de couplage. Lorsque l'espace interguide est "petit" devant les dimensions de la section transversale de l'un ou l'autre des guides, un bon recouvrement des guides par la couche minérale ne peut être obtenu, notamment pour des recouvrements en silice, que par une technique dite "FHD" très délicate à mettre en oeuvre.

Exposé de l'invention

L'invention cherche à résoudre ces problèmes, en proposant un coupleur optique directif comportant au moins deux coeurs de guide optique, en silice, reposant sur une gaine en un matériau diélectrique minéral, et une couche de recouvrement en un matériau polymère, qui recouvre les deux coeurs de guide optique, et dont l'indice de cette couche de recouvrement étant inférieur à celui des coeurs de guide optique.

Avec la combinaison du coupleur directif selon l'invention (guide en silice et recouvrement polymère), on obtient un très bon recouvrement des guides par le polymère, en particulier dans l'espace interguide, dans les zones de couplage.

De plus, la silice peut être gravée de manière connue, pour réaliser les coeurs des guides, et un dépôt de polymère peut aisément être réalisé sur l'ensemble.

Enfin, la structure selon l'invention ne nécessite pas de graver une couche de polymère : seul un dépôt de cette couche est réalisé sur des guides en silice dont la gravure ne présente pas de problème.

Le coupleur selon l'invention supprime les problèmes de connexion entre les guides du coupleur et des fibres optiques en silice.

En outre, l'indice du polymère peut être tel qu'il permette un fonctionnement unimodal. Cette condition est intéressante pour les applications au domaine des télécommunications.

Un tel coupleur peut être combiné avec des moyens d'activation thermo-optique, afin de réaliser un coupleur directif actif thermo-optique.

Le coupleur directif selon l'invention permet de bénéficier des bonnes propriétés thermo-optiques des polymères, et des qualités des guides en silice. Enfin, la structure selon l'invention est avantageuse du fait que les polymères et la silice présentent des variations d'indice de réfraction avec la température, qui sont de sens opposés, ce qui permet de réaliser l'aiguillage avec de moins fortes variations de température, et donc de plus faibles courants électriques que dans les dispositifs de l'art antérieur.

Les moyens d'activation thermo-optique peuvent comporter une électrode déposée sur la couche de recouvrement en matériau polymère, par exemple suivant l'une des trois dispositions suivantes :

- au-dessus de l'espace intercoeur,
- au-dessus d'un seul des deux guides, en positionnement asymétrique,
- au-dessus des deux guides, en s'étendant également au-dessus de la zone intercoeur, avec un positionnement symétrique.

Les deuxième et troisième dispositions permettent de chauffer à la fois les coeurs en silice et la gaine optique de recouvrement en polymère ; comme les matériaux silice et polymère présentent des variations d'indice, avec la température, antagonistes (de signes opposés), la variation d'indice coeur-gaine sera beaucoup plus importante que dans le cas de la première disposition.

Le matériau polymère peut être de la famille des polyméthacrylates, ou des $\alpha$-haloacrylates, ou des polyacrylates, ou des polystyrènes, ou des polycarbonates, ou des polyvinyles, ou des polyimides, ou des polysiloxanes.

Il est également possible d'utiliser un mélange de polymères de ces familles, ou un copolymère obtenu par copolymérisation d'au moins deux monomères choisis parmi les monomères de base des familles ci-dessus.

Le matériau polymère peut également être un copolymère de :

- méthacrylate de trifluoroéthyle (MATRIFE) et de méthacrylate de méthyle (MMA) ; l'ajustement du pourcentage en poids du MATRIFE dans le polymère final permet d'ajuster l'indice de ce dernier (entre 1,41 et 1,49 à 632,8 nm),
- de méthacrylate de méthyle (MMA) et d'un monomère fluoré acrylique, méthacrylique ou $\alpha$-haloacrylate ; un tel monomère fluoré permet de diminuer l'indice de réfraction du polymère final par rapport à celui de MMA, et d'augmenter la solubilité du polymère final par rapport à celle du MMA. Cet accroissement de la solubilité permet, à son tour, d'obtenir un produit se déposant relativement aisément à la tournette pour réaliser des films épais (épaisseur de l'ordre de 10 µm),
- de méthacrylate de trifluoréthyle (MATRIFE) et d'un monomère permettant un accroissement d'indice du polymère final obtenu, par rapport à celui du MATRIFE,
- de méthacrylate de trifluoréthyle et d'un monomère permettant la réticulation du polymère ; ceci permet de déplacer la température de transition vitreuse du polymère final obtenu, et évite les problèmes de température liés à l'environnement du composant.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1A et 1B, déjà décrites, schématisent le fonctionnement d'un coupleur directif actif,
- la figure 2, déjà décrite, représente une structure de coupleur directif actif thermo-optique selon l'art antérieur,
- la figure 3 représente la structure d'un coupleur directif actif selon l'invention,
- les figures 4A à 4C représentent des variantes d'un coupleur directif actif thermo-optique selon l'invention,
- la figure 5 représente les dimensions géométrique d'un coupleur, en vue de dessus,
- les figures 6A à 6D représentent des étapes d'un procédé de réalisation d'un coupleur directif selon l'invention,
- la figure 7 illustre des performances d'un coupleur directif actif thermo-optique selon l'invention.

Exposé détaillé de modes de réalisation de l'invention

La figure 3 représente la structure d'un coupleur directif selon l'invention. Cette structure comporte essentiellement un substrat 22, par exemple en silicium. Sur ce substrat est déposé une couche 24 (indice $n_S$), dite gaine optique, en un matériau diélectrique et minéral, par exemple en silice. Cette couche 24 peut avoir une épaisseur comprise entre 7 et 20 $\mu$m, et elle joue le rôle de gaine optique inférieure.

Les références 26 et 28 désignent chacune le coeur d'un guide optique en silice. Chaque coeur peut avoir par exemple une taille de 7 $\mu$mx7 $\mu$m ; les deux coeurs sont séparés par une zone de couplage d'une largeur c d'environ 2 à 6 $\mu$m. L'indice $n_C$ du coeur de chaque guide dépend du dopage de la silice. En général, on choisit un dopage au germanium. Ainsi, à 1,3 $\mu$m de longueur d'onde, on a les indices suivants :

- silice pure : $n_0 \simeq 1,447$,
- silice à 2% de germanium : $n_2 \simeq 1,452$,
- silice dopée à 8% de germanium : $n_8 \simeq 1,457$.

Ces valeurs sont données à $\Delta n \simeq 5.10^{-4}$ près.

En général, le dopage de la silice est choisi de manière à obtenir un indice de réfraction des coeurs supérieur à l'indice de la couche 24, l'écart entre les deux indices étant sensiblement compris entre, par exemple, $10^{-3}$ et $10^{-2}$. Ces valeurs permettent d'obtenir un fonctionnement adéquat du coupleur.

Les deux coeurs de guide 26, 28 sont recouverts d'une couche de recouvrement 30, en un matériau polymère. L'indice $n_p$ de ce matériau polymère est inférieur à celui des coeurs 26, 28 de guide optique. Si un fonctionnement unimodal est nécessaire, on choisit un polymère ayant un indice permettant un tel fonctionnement unimodal. De manière plus précise, si $n_{p1}$ désigne la valeur de l'indice du polymère pour laquelle il y a apparition d'un second mode, la relation suivante traduit la condition d'unimodalité :

$$n_{p1} < n_p \qquad (1) .$$

En fait, $n_{p1}$ peut être obtenu approximativement par la formule :

$$n_{p1}^2 \approx n_c^2 - \frac{\lambda^2}{4a^2} \qquad (2)$$

où $\lambda$ désigne une longueur d'onde de fonctionnement, et a la largeur du coeur d'un guide optique. Cette approximation découle de la condition d'unimodalité :

$$0 < V = ka\sqrt{n_c^2 - n_{p1}^2} < \pi \qquad (3),$$

où $k=2\pi/\lambda$ (constante de propagation).

Par exemple, si $\lambda=1,3$ $\mu$m, $a=5$ $\mu$m et $n_c=1,451$, alors $n_{p1} \simeq 1,4451$. Par conséquent, dans ce cas précis de longueur d'onde, de taille de guide et d'indice de coeur, le polymère sera d'indice $n_p$ compris entre sensiblement 1,450 et 1,445.

La structure qui a été décrite ci-dessus présente plusieurs avantages.

Tout d'abord, le fait d'utiliser une couche de recouvrement 30 en polymère permet de recouvrir entièrement l'interguide dans la zone de couplage, située entre les deux coeurs 26 et 28. En effet, cette zone est en général assez étroite ; elle peut avoir par exemple une largeur comprise entre 2 et 6 μm. Dans de nombreux cas, où la hauteur des guides est importante, par exemple de l'ordre de la distance interguide ou plus, les techniques de dépôt de silice ne parviennent pas à combler complètement l'interguide, et le recouvrement par un polymère permet de résoudre ce problème.

De plus, les coeurs 26 et 28 étant tous deux en silice ou en silice dopée, leur indice est compatible avec l'indice d'une fibre optique en silice destinée à transmettre l'énergie lumineuse en entrée et en sortie du coupleur (fibres 1, 2, 3, 4 sur les figures 1A et 1B),

En outre, les ordres de grandeur de la variation d'indice d'un polymère, sous l'effet d'un chauffage, sont compris entre $5.10^{-4}$ et $7.10^{-3}$. Le facteur dn/dT, qui exprime la variation différentielle d'indice par rapport à la variation différentielle de température, est, pour un polymère, de l'ordre de $-10^{-4}/K$ à $-5.10^{-4}/K$, tandis que le même facteur vaut, pour la silice, environ $10^{-5}/K$. Les variations de température nécessaires pour réaliser la commutation du coupleur sont donc de l'ordre de 5 à 70°C, valeurs qui permettent d'assurer un fonctionnement du coupleur avec une consommation minime, de l'ordre de quelques dizaines de mW.

Le polymère, présentant les conditions d'indice données ci-dessus, pourra être choisi parmi les familles des polyméthacrylates, ou des α-haloacrylates, ou des polyacrylates, ou des polystyrènes, ou des polycarbonates, ou des polyvinyles, ou des polyimides, ou des polysiloxanes.

Un matériau ayant un indice ajusté peut être obtenu par copolymérisation de deux ou plusieurs monomères choisis parmi les familles citées ci-dessus, ou par mélange de polymères choisis parmi ces mêmes familles. Un test permettant de décider si le mélange ou le copolymère obtenu présente un indice satisfaisant consiste à réaliser un film du matériau en question sur un substrat, et à en mesurer l'indice par "m-lines" (cette technique est décrite par exemple dans l'article de R. ULRICH & R. TORGE "Measurement of thin film Parameters with a prism coupler", Dec. 1973/Vol.12, n°12, p. 2901-2908) à la longueur d'onde d'application. Cette technique permet de mesurer l'indice avec une précision de l'ordre de $10^{-4}$ à $10^{-3}$ selon les cas.

Un copolymère pouvant également convenir est un copolymère MATRIFE-MMA, c'est-à-dire méthacrylate de trifluoroéthyle-méthacrylate de méthyle, la fraction massique de chacun d'entre eux étant ajustée de manière à obtenir l'indice voulu.

Il est également possible de copolymériser le MMA avec tout autre monomère fluoré acrylique, méthacrylique, ou α-haloacrylate (par exemple : α-fluoroacrylate de trifluoroéthyle), ces monomères fluorés permettant de diminuer l'indice de réfraction de MMA (qui est de 1,49, donc trop élevé pour que le MMA puisse être utilisé seul). Par ailleurs, la présence de fluor permet d'augmenter la solubilité du polymère, et donc de pouvoir réaliser des dépôts en film épais : ceci est avantageux, notamment lorsqu'il s'agit de réaliser une couche de recouvrement 30 permettant de recouvrir des coeurs 26, 28 ayant une section d'environ 8 μm.

Il est également possible de copolymériser le MATRIFE avec tout autre monomère, par exemple choisi parmi l'une des familles ci-dessus, et permettant un accroissement d'indice du MATRIFE. En effet, le MATRIFE présente un indice de réfraction très bas.

Enfin, il est également possible de réaliser un copolymère de MATRIFE avec d'autres comonomères, par exemple choisis parmi les familles ci-dessus, permettant la réticulation du polymère. Ceci permet d'accroître la température de transition vitreuse du polymère obtenu, et permet d'éviter les problèmes de température que peut poser l'environnement du coupleur obtenu.

Dans tous les cas, la méthode "m-lines" permet de mesurer l'indice du produit obtenu.

Les moyens d'activation du coupleur seront par exemple des moyens thermo-optiques. Cela signifie que la variation du coefficient de couplage K du coupleur est obtenue par variation des indices respectifs du polymère et des coeurs, sous l'effet de la température. Cela signifie également que, si la condition d'unimodalité est imposée, le polymère présente alors un indice $n_p$ qui, à toute température T prise dans une gamme de fonctionnement du coupleur (par exemple : gamme comprise entre la température ambiante $T_a$ ($\sim$20°C) et la température de transition vitreuse du polymère $T_g$, ou encore entre $T_a$ et $T_g$ -10°C), satisfait à l'inégalité (1) donnée ci-dessus.

Le mode de fonctionnement thermo-optique du coupleur selon l'invention est d'autant plus avantageux que les polymères et la silice présentent des variations d'indice de réfraction, avec la température, qui sont de sens opposés, ce qui permet de réaliser le couplage avec de moins fortes variations de température, et donc de plus faibles courants électriques.

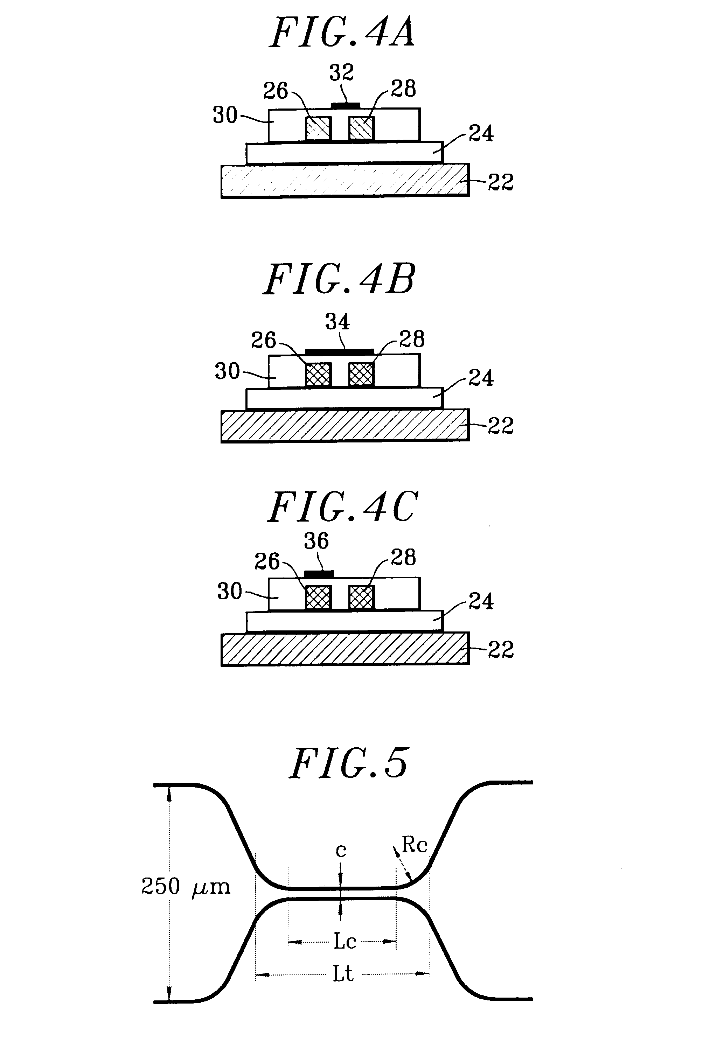

A partir de la structure d'un coupleur directif selon l'invention, qui a été décrite ci-dessus en liaison avec la figure 3, un coupleur directif thermo-optique est obtenu en réalisant, comme illustré sur les figures 4A à 4C, une électrode de commande sur la couche 30 de polymère. Les figures 4A à 4C illustrent trois positions possibles pour cette électrode : elle peut être disposée au-dessus de l'espace intercoeur (électrode 32, figure 4A), ou bien au-dessus des deux guides 26, 28 en s'étendant également au-dessus de la zone intercoeur (positionnement symétrique, électrode 34, figure 4B), ou bien au-dessus d'un seul des deux guides (positionnement asymétrique, électrode 36, figure 4C).

Une méthode va maintenant être décrite, qui permet de calculer la longueur $L_C$ d'un coupleur, à partir de la donnée d'autres paramètres de ce coupleur, et d'un certain critère d'optimisation. Cette méthode est la méthode de E.A.J.

MARCATILI, exposée dans Bell Syst. Tech. J., vol. 48, pp. 2071-2102, Septembre 1969. Les paramètres de départ, c'est-à-dire les paramètres fixés, sont :

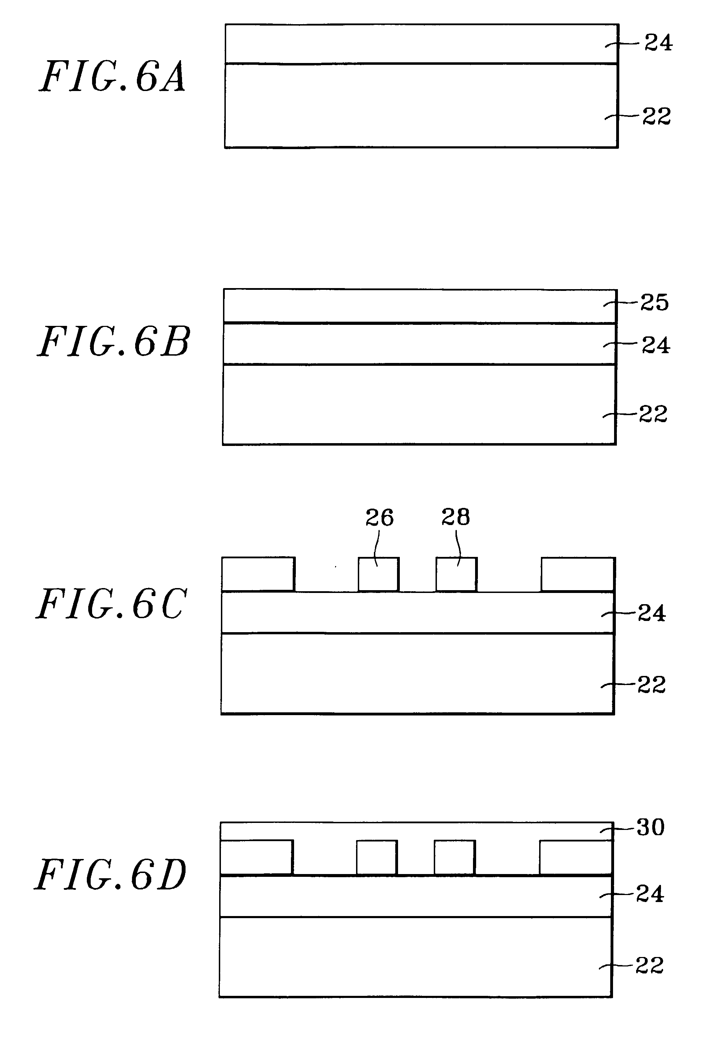

- les paramètres a et b sur les dimensions de la section des coeurs, et la distance c intercoeur (voir figure 3),
- le rayon de courbure $R_C$ de la portion courbe du coupleur, la longueur $L_T$ totale du coupleur (c'est-à-dire la longueur $L_C$ de la portion linéaire + la longueur de la partie de la zone où le guide a un rayon de courbure $R_C$ et où le couplage a encore lieu), et l'écartement h des guides (choisi de telle sorte que les guides n'ont plus d'interaction entre eux) ; la figure 5 illustre la signification de ces paramètres,
- les indices $n_p$ (polymère), $n_C$ (coeur des guides), $n_S$ (substrat).

La méthode de MARCATILI permet, pour un ensemble donné de valeurs des paramètres ci-dessus, de calculer la valeur $L_C$, ainsi que la bande passante optique à 99% (B.P.O pour un taux de couplage, en "Cross-state", de 99%). Dans ces exemples particulier, le critère choisi pour ce calcul est la maximisation de la B.P.O., ou du produit taux de couplage multiplié par B.P.O. Ce critère sera adapté, en fonction des besoins : pour un coupleur destiné à être utilisé seul, le critère portant seulement sur la B.P.O. peut suffire, tandis que pour un coupleur destiné à être utilisé en cascade avec d'autres coupleurs, le critère taux de couplage multiplié par B.P.O. sera plutôt retenu.

Le tableau I ci-dessous rassemble les résultats obtenus pour 6 cas de coupleurs différents, chaque ligne du tableau donnant les paramètres pour un coupleur. Dans tous les cas, les paramètres suivants sont choisis fixes :

- $n_C=1,4510$ ;
- $n_S=1,4472$ ;
- $R_C=50$ mm ;
- h = 250 μm.

De plus, tous les calculs sont effectués pour une longueur d'onde $\lambda=1,3$ μm.

Les paramètres $dn_p$ et $dn_c$ (colonnes 4 et 5 du tableau) sont respectivement définis par :

- $dn_p=n_p(froid)-n_p(chaud)$,
- $dn_c=n_c-n_p$ (froid),

où $n_p$(froid) et $n_p$(chaud) désignent respectivement l'indice du polymère à froid, c'est-à-dire à température ambiante, et à chaud, c'est-à-dire lorsque le coupleur est activé. Tous ces paramètres sont fixés par la nature des composants (nature du polymère, dopage de la silice).

Le paramètre V (7ème colonne du tableau) désigne la fréquence réduite, donnée par la formule (3) ci-dessus.

On vérifie, dans tous les cas, que la condition d'unimodalité : $V<\pi$ est satisfaite.

Enfin, il faut signaler que, pour toutes les structures, les tolérances sur l'interguide c et sur les largeurs de guide a sont de 0,15 μm, pour un taux de couplage de 99%.

Le coefficient $A_m$, donné dans la huitième colonne, est un coefficient qui découle de la théorie de MARCATILI, et qui permet de juger du caractère satisfaisant de la méthode : plus ce paramètre est petit devant 1, plus l'application de la méthode peut être considérée comme satisfaisante. Dans les cas particuliers donnés ici, on voit que ce paramètre a une valeur moyenne, de l'ordre de 0,5. Ceci explique que les résultats obtenus pour $L_C$ soient affectés d'une erreur relativement importante (par rapport à d'autres méthodes), pouvant atteindre 50% : par conséquent, cette méthode de simulation n'est pas très rigoureuse. Elle doit d'abord être considérée comme permettant d'obtenir un ordre de grandeur pour $L_C$. Une valeur plus précise peut ensuite être obtenue expérimentalement, en partant de cette valeur approximative.

TABLEAU I

| cas n° | c (µm) | a=b (µm) | $n_p$(froid) | $dn_p$ | $dn_c$ | R (mm) | V | $A_m$ | Lc (µm) | Lt (mm) | tolérance à froid sur $n_p$ | B.P.O. à 99% (nm) |
|---|---|---|---|---|---|---|---|---|---|---|---|---|
| 1 | 3 | 5 | 1,446 | 4,1E-3 | 5,0E-3 | 50 | 2,54 | 0,51 | 603 | 2,392 | 3,80E-4 | 88 |
| 2 | 3 | 5 | 1,447 | 5,0E-3 | 4,0E-3 | 50 | 2,54 | 0,49 | 379 | 2,168 | 3,70E-4 | 100 |
| 3 | 3 | 6 | 1,447 | 3,6E-3 | 4,0E-3 | 50 | 3,04 | 0,39 | 896 | 2,685 | 3,20E-4 | 110 |
| 4 | 3,5 | 5 | 1,447 | 3,3E-3 | 4,0E-3 | 50 | 2,54 | 0,49 | 582 | 2,371 | 3,20E-4 | 114 |
| 5 | 4 | 5 | 1,447 | 2,8E-3 | 4,0E-3 | 50 | 2,54 | 0,49 | 827 | 2,616 | 2,80E-4 | 129 |
| 6 | 4 | 6 | 1,447 | 2,6E-3 | 4,0E-3 | 50 | 3,04 | 0,39 | 1640 | 3,429 | 2,40E-4 | 135 |

EP 0 797 113 A1

Un procédé de réalisation d'un coupleur selon l'invention va maintenant être décrit, en liaison avec les figures 6A à 6D.

Tout d'abord, dans une première étape, on réalise le dépôt de la couche 24 de gaine en matériau diélectrique minéral, par exemple en silice, sur un substrat 22, par exemple en silicium monocristallin (figure 6A). Ce dépôt peut être réalisé par plasma radiofréquence ou micro-onde, à partir d'hydrure ou de chlorure de silicium.

Dans une seconde étape (figure 6B) une couche 25, en silice dopée au germanium, est déposée sur la couche de gaine 24. La technique de dépôt de cette couche 25 peut être la même que celle utilisée pour la couche 24.

Dans une troisième étape, on procède à la gravure de la couche 25. Cette gravure permet de délimiter le chemin optique des coeurs 26, 28. Préalablement, une étape de photolithographie permet de délimiter la partie à graver, et de protéger la zone des coeurs. Le masque de photolithographie contient le motif du coupleur à réaliser. Après photolithographie, la gravure se fait par attaque ionique réactive (RIE) à l'aide d'un gaz fluoré ($C_2F_6$ ou $CHF_3$). On obtient ainsi la structure représentée sur la figure 6C.

Dans une quatrième étape, on procède au recouvrement des coeurs avec une couche 30 de polymère, préparé et choisi en fonction de son indice de réfraction. De préférence, le polymère est déposé à la tournette, à partir de solutions suffisamment concentrées pour obtenir des couches de plusieurs micromètres d'épaisseur. On obtient ainsi la structure illustrée sur la figure 6D. D'autres techniques de dépôt peuvent être mises en oeuvre, suivant les propriétés du polymère : la technique d'évaporation lente ou encore la sérigraphie.

Enfin, on procède au dépôt des électrodes métalliques, telles que les électrodes 32, 34, 36 des figures 4A à 4C. Le dépôt d'électrodes peut être réalisé par pulvérisation, ou sublimation, d'un métal de type aluminium, or, chrome, ou de tout autre alliage de ces métaux entre eux ou d'autres alliages de type étain-plomb, ou plomb-bismuth, par exemple. L'épaisseur et la taille des électrodes sont calculées de telle sorte que l'effet Joule soit suffisant pour obtenir l'élévation de température qui convient au fonctionnement du coupleur. Cette épaisseur est en général de l'ordre de $0,1\,\mu m$ à 1 $\mu m$, ou plus. Une couche uniforme du métal choisi est donc déposée, ayant ladite épaisseur. Puis, les électrodes sont délimitées par un processus de gravure humide, en milieu aqueux, de cette couche préalablement déposée. Les électrodes comprennent une zone utile, dont la surface correspond à la surface à chauffer, cette zone utile étant prolongée de chaque côté par un circuit d'amenée du courant électrique.

La troisième étape du procédé qui vient d'être décrit est une étape de gravure d'une couche de silice dopée, pour délimiter le trajet des guides optiques. Ce type de technique est bien maîtrisé, du point de vue industriel. Par conséquent, la réalisation d'un coupleur selon l'invention ne pose pas les problèmes rencontrés lors de la réalisation de coupleurs directifs actifs, fonctionnant en mode thermo-optique, et dont la structure de guidage est réalisée entièrement en polymère.

En outre, l'étape de dépôt de la couche 30 de polymère permet de recouvrir entièrement l'espace interguide entre les coeurs 26 et 28, même lorsque cet espace est assez étroit par rapport à la taille des guides. Ceci permet de résoudre les problèmes posés par les structures connues selon l'art antérieur, dans lesquelles la couche de recouvrement est une couche de silice, qui ne permet pas de combler totalement l'espace interguide.

Un exemple de réalisation d'un coupleur particulier va maintenant être donné. Les coeurs de guides ont été réalisés, conformément au procédé décrit ci-dessus, en technologie silice sur silicium. Un substrat de 4 pouces (101,6 mm) en silicium monocristallin est préparé, sur lequel une couche de silice intrinsèque, d'une épaisseur comprise entre 10 et 20 $\mu m$ est déposée. Par dessus, une couche de silice dopée au germanium, d'une épaisseur pouvant aller jusqu'à 8 $\mu m$, est déposée. Cette couche a un indice de réfraction supérieur à celui de la couche inférieure, et l'écart se situe entre $10^{-3}$ et $10^{-2}$, par exemple.

La gravure de cette couche est ensuite réalisée pour délimiter le chemin optique des coeurs (3ème étape du procédé décrit ci-dessus). Pour une meilleure sélectivité d'attaque au moment de la gravure, on ne grave que pour dégager 20 à 30 $\mu m$ autour de chaque coeur, en laissant ainsi la couche dopée sur la périphérie du circuit.

Une étape critique est celle de la réalisation du polymère. Un polymère méthacrylique a été préparé, d'indice de réfraction compris entre 1,44 et 1,450, à la longueur d'onde intéressante (comprise entre 1,30 et 1,50 $\mu m$). Ce polymère méthacrylique est ensuite combiné avec une petite fraction d'un polymère commun, choisi dans la famille des polyméthacrylates, ou des $\alpha$-haloacrylates, ou des polyacrylates, ou des polystyrènes, ou des polycarbonates, ou des polyvinyles, ou des polyimides, ou des polysiloxanes. Cette méthode est très efficace et précise, car on ne peut que difficilement synthétiser directement un polymère ayant exactement l'indice voulu, à $10^{-3}$ près.

Le poly(MATRIFE = méthacrylate de trifluoroéthyle) et le PMMA (polyméthacrylate de méthyle) qui ont des indices de réfraction respectivement de 1,41 et 1,49 dans le visible, ont été retenus. Ces deux homopolymères sont incompatibles en mélange, et un copolymère de MATRIFE et de MMA a été réalisé. La polymérisation est sans doute du type radicalaire, qui donne un copolymère statistique des deux monomères. Ceci assure un indice qui est une moyenne pondérée de ceux des deux homopolymères correspondants :

$$n_{copo} = Xn_{PMMA} + (1-X)\,n_{PMAT},$$

X étant la fraction massique du PMMA, et $n_{PMMA}$ et $n_{PMAT}$ étant les indices respectifs du PMMA et du PMATRIFE.

Les réactivités réciproques de ces monomères ne sont pas connues (notamment la constante de LEWIS et MAYO), mais on peut penser que, leurs formules chimiques étant très voisines, notamment autour du site actif de polymérisation, ces réactivités sont relativement voisines, surtout pour des concentrations de chaque monomère supérieures à 10% massique, ce qui est le cas ici.

La copolymérisation d'un polymère d'indice 1,445 à 1,3 µm, peut s'effectuer comme suit. Dans un ballon d'un litre, on mélange en continu du solvant THF (500 cm$^3$) avec les monomères déstabilisés, à raison de 69% en mole de MMA, soit 57% en poids (par exemple : 28,5 g) de ce monomère, et 43% (en poids) de MATRIFE (21,5 g). L'amorçage est fait par de l'AIBN (azo bis-isobutyronitrile) à raison de 1% en mole/monomère. La réaction se déroule à 60°C, à reflux sous atmosphère d'argon, pendant 50 heures. A la fin, le copolymère (CP2MA) est précipité dans de l'éthanol absolu, et séché à l'étuve à vide pendant 24 heures, à 40°C. Le rendement final est supérieur à 80%.

On peut ensuite mélanger le CP2MA pour ajuster l'indice de réfraction, avec un peu de PMMA, par exemple pour élever l'indice à 1,448. Ce copolymère présente une solubilité exceptionnelle, puisqu'on peut obtenir des solutions de 600 g/l dans du trichloro-1,1,2 éthane.

A partir de ces solutions, on étale le polymère obtenu, à la tournette, sur le substrat comportant aussi les coeurs de silice.

Le dépôt des électrodes est ensuite réalisé par sublimation sous vide, pour obtenir un film d'aluminium de 500 nm d'épaisseur sur la zone de couplage.

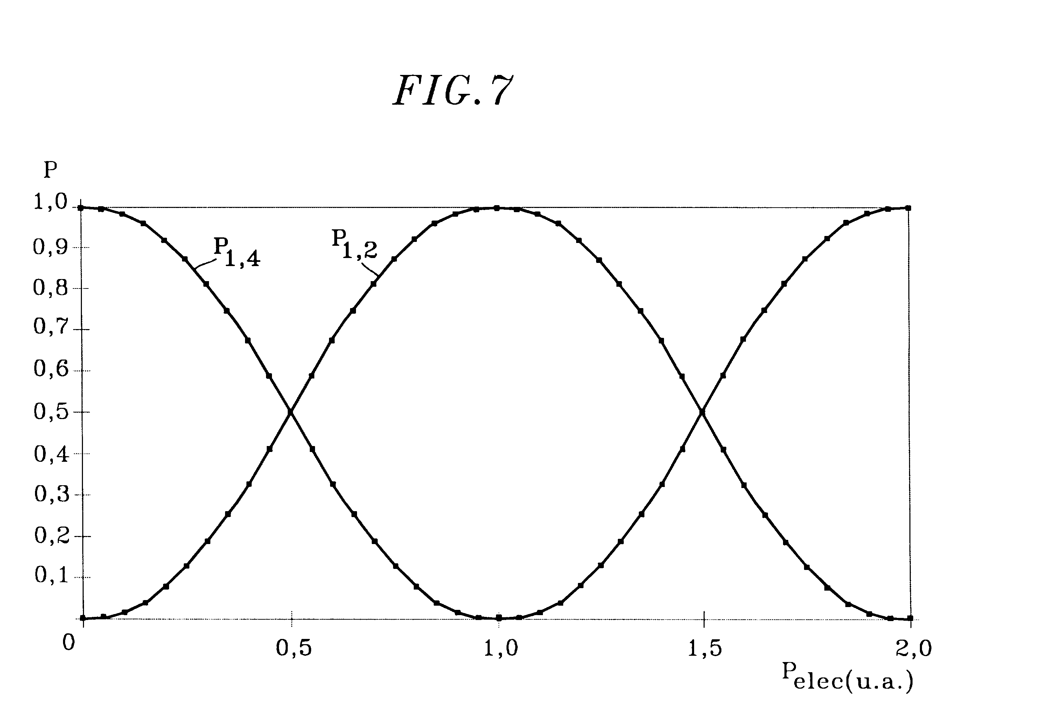

La figure 7 permet d'illustrer les performances d'un coupleur selon l'invention. Cette figure représente la puissance optique de sortie, sur les guides 4 et 2 (voir figure 1A), en fonction de la puissance électrique $P_{élec}$ (en unité arbitraire) injectée dans les électrodes. Pour une puissance $P_{élec}$ égale à 0, $P_{1,4}$ est maximum (le coupleur fonctionne alors en mode "Bar-state"), et lorsque $P_{élec} = 1$(U.A.), $P_{1,2}$ est maximum, et la puissance $P_{1,4}$ est minimum (le coupleur fonctionne alors en "Cross-state").

Les coupleurs selon l'invention peuvent être mis en oeuvre dans le domaine des télécommunications, en particulier dans le cas de coupleurs monomodes. Les coupleurs multimodes ont des applications pour la réalisation de capteurs.

## Revendications

1. Coupleur optique directif comportant au moins deux coeurs (26, 28) de guide optique, en silice, reposant sur une gaine (24) en un matériau diélectrique minéral, et une couche de recouvrement (30) en un matériau polymère, qui recouvre les deux coeurs de guide optique, et dont l'indice est inférieur à celui des coeurs de guide optique.

2. Coupleur optique directif selon la revendication 1, l'indice du polymère permettant en outre un fonctionnement unimodal.

3. Coupleur optique selon l'une des revendications 1 ou 2, comportant en outre des moyens (32, 34, 36) d'activation thermo-optique.

4. Coupleur optique selon la revendication 3, les moyens d'activation thermo-optique comportant une électrode (32, 34, 36) déposée sur la couche de recouvrement en matériau polymère.

5. Coupleur optique selon la revendication 4, l'électrode (32) étant située au-dessus de l'espace intercoeur.

6. Coupleur optique selon la revendication 4, l'électrode (36) étant située au-dessus d'un seul des deux guides.

7. Coupleur optique selon la revendication 4, l'électrode (34) étant située au-dessus des deux guides, en s'étendant également au-dessus de la zone intercoeur.

8. Coupleur optique selon l'une des revendications 1 à 7, le matériau polymère (30) étant choisi dans la famille des polyméthacrylates, ou des α-haloacrylates, ou des polyacrylates, ou des polystyrènes, ou des polycarbonates, ou des polyvinyles, ou des polyimides, ou des polysiloxanes.

9. Coupleur optique selon l'une des revendications 1 à 7, le matériau polymère (30) étant un mélange ou un copolymère obtenu à partir de polymères choisis parmi les polyméthacrylates, les α-haloacrylates, les polyacrylates, les polystyrènes, les polycarbonates, les polyvinyles, les polyimides, ou les polysiloxanes.

10. Coupleur optique selon l'une des revendications 1 à 7, le matériau polymère (30) étant un copolymère de méthacrylate de trifluoroéthyle et de méthacrylate de méthyle.

11. Coupleur optique selon l'une des revendications 1 à 7, le matériau polymère (30) étant un copolymère de méthacrylate de méthyle et d'un monomère fluoré acrylique, méthacrylique ou $\alpha$-haloacrylate.

12. Coupleur optique selon l'une des revendications 1 à 7, le matériau polymère (30) étant un copolymère de méthacrylate de trifluoréthyle, et d'un monomère permettant un accroissement d'indice du méthacrylate de trifluoréthyle.

13. Coupleur optique selon l'une des revendications 1 à 7, le matériau polymère (30) étant un copolymère de méthacrylate de trifluoréthyle et d'un monomère permettant la réticulation du polymère.

# FIG.1A

# FIG.1B

# FIG.2

$P_{elec}$

# FIG.3

## FIG.4A

## FIG.4B

## FIG.4C

## FIG.5

*FIG.6A*

24

22

*FIG.6B*

25

24

22

26    28

*FIG.6C*

24

22

30

*FIG.6D*

24

22

FIG.7

EP 0 797 113 A1

**Office européen des brevets**

## RAPPORT DE RECHERCHE EUROPEENNE

Numero de la demande

EP 97 40 0601

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | ELECTRONICS LETTERS, vol. 30, no. 8, 14 Avril 1994, page 639/640 XP000451508 KEIL N ET AL: "4X4 POLYMER THERMO-OPTIC DIRECTIONAL COUPLER SWITCH AT 1,55 MUM" * tout le document * | 1 | G02B6/12 G02F1/29 |
| A | PATENT ABSTRACTS OF JAPAN vol. 017, no. 007 (P-1465), 7 Janvier 1993 & JP 04 238305 A (NIPPON TELEGR & TELEPH CORP), 26 Août 1992, * abrégé * | 1 | |
| A | US 4 940 328 A (HARTMAN NILE F) 10 Juillet 1990 * colonne 3, ligne 50 - colonne 4, ligne 11 * * figure 3 * | 1 | |
| A | EP 0 306 956 A (HITACHI LTD) 15 Mars 1989 * colonne 3, ligne 14 - colonne 6, ligne 11 * * figure 1 * ----- | 1 | **DOMAINES TECHNIQUES RECHERCHES (Int.Cl.6)** G02B G02F |

Le présent rapport a été établi pour toutes les revendications

| Lieu de la recherche | Date d'achèvement de la recherche | Examinateur |
|---|---|---|
| BERLIN | 23 Juin 1997 | Luck, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)